# EUROPÄISCHE PATENTSCHRIFT

(11) **EP 2 912 339 B1**
(45) Veröffentlichungstag und Bekanntmachung des Hinweises auf die Patenterteilung: **04.03.2020**
(21) Anmeldenummer: 13777222.4
(22) Anmeldetag: 24.09.2013
(51) Int. Cl.: F16F 15/139

(54) **DREHSCHWINGUNGSDÄMPFER**
TORSIONAL VIBRATION DAMPER
AMORTISSEUR DE VIBRATIONS DE TORSION

(30) Priorität: 25.10.2012 DE 102012219524
(43) Veröffentlichungstag der Anmeldung: 02.09.2015
(73) Patentinhaber: Schaeffler Technologies AG & Co. KG, 91074 Herzogenaurach (DE)
(72) Erfinder: EDL, Ralf, 77855 Achern (DE)
(86) Internationale Anmeldenummer: PCT/DE2013/200185
(87) Internationale Veröffentlichungsnummer: WO 2014/063693

(56) Entgegenhaltungen:
- EP-A1- 0 919 742
- DE-A1- 4 418 284
- DE-A1-102009 035 916

## Beschreibung

Die Erfindung betrifft einen Drehschwingungsdämpfer, insbesondere Zweimassenschwungrad, aufweisend ein Eingangsteil mit einem ersten Flanschteil und ein Ausgangsteil mit einem zweiten Flanschteil mit einer gemeinsamen Drehachse, um die das Eingangsteil und das Ausgangsteil zusammen drehbar und relativ zueinander begrenzt verdrehbar sind und eine zwischen dem Eingangsteil und dem Ausgangsteil wirksame Feder-Dämpfer-Einrichtung mit wenigstens einem Energiespeicher und einer Reibeinrichtung mit einem Reibring und einer mit dem ersten Flanschteil verbundenen Stützscheibe.

Aus der DE 10 2010 014 677 A1 ist ein Schwingungsdämpfer bekannt, angeordnet an einer Antriebseinheit mit einer Antriebswelle, mit zwei entgegen der Wirkung mehrerer, über den Umfang angeordneter Energiespeicher relativ verdrehbaren Schwungmassen, wobei eine erste der Schwungmassen mehrere, eine Ringkammer zur Aufnahme der Energiespeicher bildende, miteinander verbundene Scheibenteile und eine zweite der Schwungmassen mehrere, von radial innen in die Ringkammer eingreifende, in Umfangsrichtung auf die Energiespeicher einwirkende Beaufschlagungseinrichtungen aufweist, bei dem jeweils eine Beaufschlagungseinrichtung aus einem von mehreren über den Umfang verteilten und auf der zweiten Schwungmasse aufgenommenen Flanschsegmenten gebildet ist, um eine kostengünstige Fertigung und eine verbesserte Fertigungsqualität zu ermöglichen.

Aus der DE 10 2008 005 022 A1 ist ein ringscheibenförmiges Bauteil bekannt mit wenigstens einer senkrecht zu einer Achse des Bauteils gerichteten kreisringscheibenförmigen Reibfläche, die in Einbaulage infolge einer Relativdrehung zu einem Gegenbauteil in gleitende Reibberührung mit dem Gegenbauteil bringbar ist, welches ringscheibenförmige Bauteil mit um seine Achse gestörter zyklischer Symmetrie ausgebildet ist, um Abhilfemaßnahmen für das Auftreten von insbesondere im Hörfrequenzbereich liegenden Schwingungen zu schaffen.

Der DE 10 2008 005 022 A1 zufolge wird ein radial gerichteter Ringscheibenteil eines Reibrings von einem Stützring in Anlage an ein primäres Schwungrad gedrückt, wobei zwischen dem Stützring und einem Ringansatz ein Tellerfederring angeordnet ist, der eine Anpresskraft aufbringt. Der Reibring dient zur Dämpfung von Relativverdrehungen zwischen dem primären Schwungrad und einem sekundären Schwungrad, die unter einem Einfluss von zwischen dem primären Schwungrad und dem sekundären Schwungrad wirksamen Drehmomentschwankungen entstehen und zu einer Verformung von Energiespeicherelementen führen. Je nach Vorspannung des Tellerfederrings, Art und Größe der in gegenseitiger Anlage befindlichen Flächen und Art der Befestigung des Reibrings am sekundären Schwungrad (mit oder ohne Spiel in Umfangsrichtung) kann die Relativdrehung in zweckentsprechender Weise gedämpft werden.

Der DE 10 2009 035 916 A1 bildet den nächstliegenden Stand der Technik und offenbart alle Merkmale der Präambel des Anspruchs 1.

Der Erfindung liegt die Aufgabe zugrunde, einen eingangs genannten Drehschwingungsdämpfer baulich und/oder funktional zu verbessern. Insbesondere soll ein Bauraumbedarf verringert sein. Insbesondere soll eine besonders kompakte Bauform erzielt sein. Insbesondere soll eine leichte und filigrane Bauweise erzielt sein. Insbesondere soll ein Schwingwinkel während einer Startphase einer Brennkraftmaschine und/oder bei einem Anfahren reduziert sein. Insbesondere soll ein Startverhalten verbessert sein.

Die Lösung der Aufgabe erfolgt mit einem Drehschwingungsdämpfer, insbesondere Zweimassenschwungrad, aufweisend ein Eingangsteil mit einem ersten Flanschteil und ein Ausgangsteil mit einem zweiten Flanschteil mit einer gemeinsamen Drehachse, um die das Eingangsteil und das Ausgangsteil zusammen drehbar und relativ zueinander begrenzt verdrehbar sind und eine zwischen dem Eingangsteil und dem Ausgangsteil wirksame Feder-Dämpfer-Einrichtung mit wenigstens einem Energiespeicher und einer Reibeinrichtung mit einem Reibring und einer mit dem ersten Flanschteil verbundenen Stützscheibe, bei dem die Stützscheibe zur Verbindung mit dem ersten Flanschteil nach radial innen gerichtete Fortsätze aufweist.

Der Drehschwingungsdämpfer kann zur Anordnung in einem Antriebsstrang eines Kraftfahrzeugs geeignet sein. Der Antriebsstrang kann eine Brennkraftmaschine aufweisen. Der Antriebsstrang kann eine Reibungskupplung aufweisen. Der Antriebsstrang kann ein Getriebe aufweisen. Das Getriebe kann Getriebewellen aufweisen. Der Antriebsstrang kann wenigstens ein antreibbares Rad aufweisen. Der Drehschwingungsdämpfer kann zur Anordnung zwischen der Brennkraftmaschine und der Reibungskupplung geeignet sein. Der Drehschwingungsdämpfer kann dazu dienen, Drehschwingungen zu reduzieren, die durch periodische Vorgänge, insbesondere in der Brennkraftmaschine, angeregt werden.

Das Eingangsteil kann zur Antriebsverbindung mit der Brennkraftmaschine dienen. Das Ausgangsteil kann zur Antriebsverbindung mit der Reibungskupplung dienen. Die Begriffe "Eingangsteil" und "Ausgangsteil" sind auf eine von der Brennkraftmaschine ausgehende Leistungsflussrichtung bezogen. Die wenigstens eine Energiespeicher kann eine Bogenfeder aufweisen. Das Eingangsteil kann einen Aufnahmeraum für den wenigstens einen Energiespeicher aufweisen. Der wenigstens eine Energiespeicher kann in dem Aufnahmeraum angeordnet sein. Der wenigstens eine Energiespeicher kann sich einerseits an dem Eingangsteil und andererseits an dem Ausgangsteil abstützen. Der wenigstens eine Energiespeicher und die Reibeinrichtung können in Parallelschaltung angeordnet sein.

Das Eingangsteil kann ein Deckelteil aufweisen. Das erste Flanschteil kann eine scheibenartige Form aufweisen. Das erste Flanschteil kann eine topfartige Form mit einem Bodenabschnitt und einem Randabschnitt aufweisen. Der Randabschnitt kann zu dem Deckelteil hin gerichtet sein. Das erste Flanschteil kann ein zentrisch angeordnetes Loch aufweisen. Das erste Flanschteil kann einen Lochkranz aufweisen, der um das zentrisch angeordnete Loch herum angeordnet ist. Das Deckelteil kann eine kreisringscheibenartige Form aufweisen. Das Deckelteil kann an dem ersten Flanschteil angeordnet sein. Das Deckelteil kann in den Randabschnitt des ersten Flanschteils eingesetzt sein. Das Deckelteil kann mit dem ersten Flanschteil fest verbunden sein. Das Deckelteil kann mit dem ersten Flanschteil stoffschlüssig verbunden, insbesondere verschweißt, sein.

Das zweite Flanschteil kann in Erstreckungsrichtung der Drehachse zwischen dem ersten Flanschteil und dem Deckelteil angeordnet sein. Das zweite Flanschteil kann eine ringscheibenartige Form aufweisen. Das zweite Flanschteil kann einen Außenradius aufweisen. Das zweite Flanschteil kann ein zentrisch angeordnetes Loch aufweisen. Das Flanschteil kann einen Innenradius aufweisen. Das zweite Flanschteil kann nach radial außen gerichtete Fortsätze aufweisen. Die Fortsätze können in den Aufnahmeraum des Eingangsteils ragen. Die Fortsätze können zur Abstützung des wenigstens einen Energiespeichers an dem Ausgangsteil dienen. Das Ausgangsteil kann eine Schwungmasse aufweisen, die mit dem zweiten Flanschteil verbunden ist.

Der Reibring kann ein Kunststoffmaterial aufweisen. Der Reibring kann ein Reibmaterial aufweisen. Der Reibring kann wenigstens eine Reibfläche aufweisen. Die Stützscheibe kann eine ringscheibenartige Form aufweisen. Die Stützscheibe kann eine stufenartigen Querschnitt aufweisen. Die Stützscheibe kann einen Lochkranz aufweisen. Der Lochkranz der Stützscheibe kann mit dem Lochkranz des ersten Flanschteils korrespondieren. Die Stützscheibe kann zusammen mit dem ersten Flanschteil einen Aufnahmeraum für den Reibring begrenzen. Die Stützscheibe kann zur Abstützung einer Anpresskraft für den Reibring dienen. Die Reibeinrichtung kann eine Tellerfeder aufweisen. Die Tellerfeder kann zur Aufbringung einer Anpresskraft für den Reibring dienen. Die Stützscheibe kann zur Abstützung der Tellerfeder dienen.

Mit dem erfindungsgemäßen Drehschwingungsdämpfer ist ein Bauraumbedarf verringert. Der Drehschwingungsdämpfer weist eine besonders kompakte, leichte und filigrane Bauform auf. Ein Schwingwinkel während einer Startphase einer Brennkraftmaschine und/oder bei einem Anfahren ist reduziert. Ein Startverhalten ist verbessert.

Das Eingangsteil weist zur gegenseitigen verdrehbaren Lagerung des Eingangsteils und des Ausgangsteils ein Lagerteil auf, das zunächst baulich gesondert hergestellt und nachfolgend mit dem ersten Flanschteil verbunden sein kann. Das Lagerteil kann einen Flanschabschnitt und einen Lagerabschnitt aufweisen. Der Flanschabschnitt kann zur Verbindung des Lagerteils mit dem ersten Flanschteil dienen. Der Flanschabschnitt kann einen Lochkranz aufweisen. Der Lochkranz des Flanschabschnitts kann mit dem Lochkranz des ersten Flanschteils korrespondieren. Das Lagerteil und das erste Flanschteil können miteinander kraft- und/oder formschlüssig verbunden, insbesondere vernietet, sein. Der Lagerabschnitt kann zur verdrehbaren Lagerung des Ausgangsteils dienen. Der Flanschabschnitt und der Lagerabschnitt können einen L-förmigen Querschnitt des Lagerteils bilden.

Zur gegenseitigen verdrehbaren Lagerung des Eingangsteils und des Ausgangsteils kann ein Wälzlager mit einem Innenring, einem Außenring und Wälzkörpern vorgesehen sein. Der Innenring kann an dem Lagerabschnitt angeordnet sein. Der Außenring kann an dem Ausgangsteil, insbesondere an der Schwungmasse des Ausgangsteils, angeordnet sein.

Die Stützscheibe kann zusammen mit dem Lagerteil mit dem ersten Flanschteil verbunden sein. Die Stützscheibe kann zusammen mit dem Lagerteil mit dem ersten Flanschteil kraft- und/oder formschlüssig verbunden, insbesondere vernietet, sein. Erfindungsgemäß bildet das Lagerteil eine Reibfläche für den Reibring. Der Flanschabschnitt des Lagerteils kann eine Reibfläche für den Reibring bilden.

Das zweite Flanschteil kann einen Nabenabschnitt mit einer Profilierung und der Reibring kann nach radial außen gerichtete Fortsätze aufweisen, die zur formschlüssigen Mitnahme des Reibrings in Umfangsrichtung in die Profilierung des Nabenabschnitts eingreifen, wobei die Fortsätze jeweils rampenförmige Anlageflächen für die Profilierung des Nabenabschnitts aufweisen können. Der Nabenabschnitt kann an dem Innenradius des zweiten Flanschteils angeordnet sein. Der Reibring kann einen Innenradius und einen Außenradius aufweisen. Die Fortsätze des Reibrings können an dessen Außenradius angeordnet sein. Die Fortsätze des Reibrings können in die Profilierung des Nabenabschnitts in Umfangsrichtung spielbehaftet eingreifen. Die Fortsätze des Reibrings und die Profilierung des Nabenabschnitts können axial fügbar sein.

Die Reibeinrichtung kann eine Reibscheibe aufweist, die eine Reibfläche für den Reibring bildet und zur formschlüssigen Mitnahme in Umfangsrichtung die Stützscheibe abschnittsweise umgreift. Die Reibscheibe kann nach radial innen gerichtete Fortsätze aufweisen, die die Fortsätze der Stützscheibe abschnittsweise umgreifen.

Das Eingangsteil kann einen radial äußeren Rand und einen Aufnahmeraum für den wenigstens einen Energiespeicher aufweisen und der Aufnahmeraum kann von dem Rand des Eingangsteils nach radial innen beabstandet angeordnet sein. Der Aufnahmeraum kann von dem Rand des Eingangsteils derart nach radial innen beabstandet angeordnet sein, dass radial außerhalb des Aufnahmeraum ein Schwungmassenabschnitt des Eingangsteils gebildet sein kann. Der Aufnahmeraum kann von dem Rand des Eingangsteils derart nach radial innen beabstandet angeordnet sein, dass radial außerhalb des Aufnahmeraums eine Verbindung zwischen der ersten Flanschteil und dem Deckelteil des Eingangsteils angeordnet sein kann. Radial außerhalb des Aufnahmeraums kann zwischen dem ersten Flanschteil und dem Deckelteil wenigstens ein Dichtelement angeordnet sein. Der wenigstens eine Energiespeicher kann eine einstufige Bogenfeder aufweisen. Das Ausgangsteil kann eine mit dem Flanschteil verbundene Schwungmasse aufweisen, die in einem Stanz-Umform-Verfahren hergestellt ist.

Zusammenfassend und mit anderen Worten dargestellt ergibt sich somit durch die Erfindung unter anderem eine Reibsteuerscheibe für Zweimassenschwungräder nach dem Prinzip eines unter der Bezeichnung Zmard Damp bekannten Schwingungsdämpfers. Die Reibsteuerscheibe kann eine sehr kompakte Bauweise aufweisen, wobei eine Klemmkraftabstützung mittels einer radial innen offenen Stützscheibe umgesetzt sein kann. Es kann ein Reibring mit zwei Reibflächen vorgesehen sein, die an eine Primärseite, bestehend aus einer Primärscheibe und einem Lagerdom, angebunden sind. Der Lagerdom kann eine erste Reibfläche bilden, eine in Umfangsrichtung zur Primärseite fixierte Planscheibe kann eine zweite Reibfläche bilden. Ein Abtrieb kann formschlüssig über Fensterflanken in einem Flansch erfolgen und freiwinkelbehaftet sein. Eine Reibkraft kann über eine Tellerfeder aufgebracht sein, die mittels einer Stützscheibe axial vorgespannt sein kann. Die Stützscheibe kann in Bereichen zwischen Schraubenkopfauflagen mit der Primärscheibe vernietet sein.

Mit "kann" sind insbesondere optionale Merkmale der Erfindung bezeichnet. Demzufolge gibt es jeweils ein Ausführungsbeispiel der Erfindung, das das jeweilige Merkmal oder die jeweiligen Merkmale aufweist.

Nachfolgend wird ein Ausführungsbeispiel der Erfindung unter Bezugnahme auf Figuren näher beschrieben. Aus dieser Beschreibung ergeben sich weitere Merkmale und Vorteile. Konkrete Merkmale dieses Ausführungsbeispiels können allgemeine Merkmale der Erfindung darstellen. Mit anderen Merkmalen verbundene Merkmale dieses Ausführungsbeispiels können auch einzelne Merkmale der Erfindung darstellen.

Es zeigen schematisch und beispielhaft:
- Fig. 1: ein Zweimassenschwungrad mit einer Reibeinrichtung in ausschnittsweiser Frontansicht und
- Fig. 2: ein Zweimassenschwungrad mit einer Reibeinrichtung in ausschnittsweiser Schnittansicht.

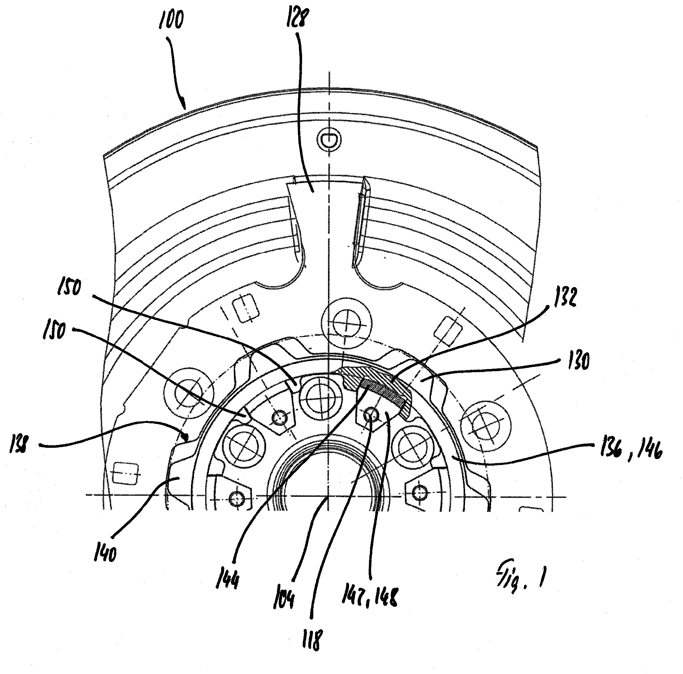

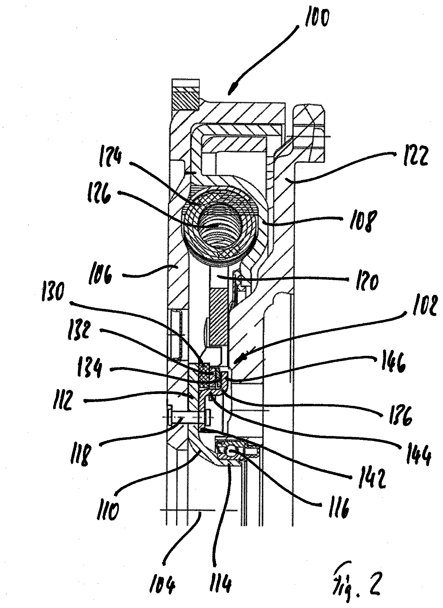

Fig. 1 zeigt ein Zweimassenschwungrad 100 mit einer Reibeinrichtung 102 in ausschnittsweiser Frontansicht, eine ausschnittsweise Schnittansicht ist des Zweimassenschwungrads 100 ist in Fig. 2 gezeigt.

Das Zweimassenschwungrad 100 weist ein Eingangsteil und ein Ausgangsteil auf. Das Zweimassenschwungrad 100 ist um eine Drehachse 104 drehbar. Das Eingangsteil und das Ausgangsteil sind relativ zueinander begrenzt um die Drehachse 104 verdrehbar.

Das Eingangsteil des Zweimassenschwungrads 100 weist ein Flanschteil 106 und ein Deckelteil 108 auf. Das Flanschteil 106 weist eine topfartige Form mit einem Bodenabschnitt und einem Randabschnitt auf. Das Deckelteil 108 weist eine profilierte scheibenartige Form auf. Das Deckelteil 108 ist in das Flanschteil 106 eingesetzt und liegt radial innen an dem Randabschnitt des Flanschteils 106 sowie abschnittsweise an dem Bodenabschnitt an. Das Flanschteil 106 und das Deckelteil 108 sind miteinander fest verbunden. Das Flanschteil 106 und das Deckelteil 108 sind miteinander verschweißt. Das Eingangsteil kann mit einer Brennkraftmaschine verbunden werden. Das Flanschteil 106 dient zur Verbindung des Zweimassenschwungrads 100 mit der Brennkraftmaschine.

Das Eingangsteil des Zweimassenschwungrads 100 weist ein Lagerteil 110 auf. Das Lagerteil 110 dient zur gegenseitigen verdrehbaren Lagerung des Eingangsteils und des Ausgangsteils. Das Lagerteil 110 weist einen Flanschabschnitt 112 und einen Lagerabschnitt 114 auf. Der Flanschabschnitt 112 und der Lagerabschnitt 114 weisen zueinander rechtwinklig angeordnete Oberflächen auf. Zur Lagerung ist ein Kugellager 116 vorgesehen. Das Kugellager 116 ist an dem Lagerabschnitt 114 angeordnet. Das Lagerteil 110 ist mit seinem Flanschabschnitt 112 mithilfe von Nieten 118 mit dem Flanschteil 106 verbunden.

Das Ausgangsteil weist ein Flanschteil 120 auf. Das Flanschteil 120 weist eine kreisringscheibenartige Form auf. Das Flanschteil 120 weist einen Außenradius auf. Das Flanschteil 120 weist einen Innenradius auf. Das Flanschteil 120 des Ausgangsteils ist in Erstreckungsrichtung der Drehachse 104 betrachtet zwischen dem Flanschteil 106 und dem Deckelteil 108 des Eingangsteils angeordnet. Das Ausgangsteil weist eine Schwungmasse 122 auf. Die Schwungmasse 122 ist mit dem Flanschteil 120 verbunden, vorliegend vernietet. Das Ausgangsteil kann mit einer Reibungskupplung verbunden werden. Die Schwungmasse 122 dient zur Verbindung des Zweimassenschwungrads 100 mit der Reibungskupplung.

Zwischen dem Eingangsteil und dem Ausgangsteil ist eine Feder-Dämpfer-Einrichtung wirksam. Die Feder-Dämpfer-Einrichtung weist Energiespeicher 124 auf. Vorliegend sind die Energiespeicher 124 als einstufige Bogenfedern ausgehführt. Das Flanschteil 106 und das Deckelteil 108 begrenzen einen Aufnahmeraum 126 für die Energiespeicher 124. Die Energiespeicher 124 stützen sich an dem Eingangsteil und an dem Flanschteil 120 des Ausgangsteils ab. Dafür weist das Flanschteil 120 nach radial außen gerichtete Fortsätze 128 auf, die in den Aufnahmeraum 124 hinein ragen.

Die Feder-Dämpfer-Einrichtung weist die Reibeinrichtung 102 auf. Die Energiespeicher 124 und die Reibeinrichtung 102 sind in Parallelschaltung angeordnet. Die Reibeinrichtung 102 weist einen Reibring 130 auf. Die Reibeinrichtung 102 weist eine Reibscheibe 132 auf. Die Reibeinrichtung 102 weist eine Tellerfeder 134 auf. Die Reibeinrichtung 102 weist eine Stützscheibe 136 auf. Die Stützscheibe 136 ist mithilfe der Nieten 118 zusammen mit dem Lagerteil 110 mit dem ersten Flanschteil 106 verbunden. Die Stützscheibe 136 weist einen stufenartigen Querschnitt auf und begrenzt einen Aufnahmeraum für den Reibring 130, die Reibscheibe 132 und die Tellerfeder 134.

Der Reibring 130 ist in Erstreckungsrichtung der Drehachse 104 zwischen dem Flanschabschnitt 112 des Lagerteils 110 und der Reibscheibe 132 angeordnet. Damit bilden der Flanschabschnitt 112 des Lagerteils 110 und die Reibscheibe 132 jeweils eine Reibfläche für den Reibring 130. Die Tellerfeder 134 ist in Erstreckungsrichtung der Drehachse 104 zwischen der Reibscheibe 132 und der Stützscheibe 136 angeordnet. Die Tellerfeder 134 stützt sich einerseits an der Reibscheibe 132 und andererseits an der Stützscheibe 136 ab. Mithilfe der Tellerfeder 134 ist die Reibeinrichtung zur Erzeugung einer Reibkraft mit einer Vorspannkraft beaufschlagt.

Das Lagerteil 110, die Reibscheibe 132, die Tellerfeder 134 und die Stützscheibe 136 sind drehfest mit dem Flanschteil 106 des Eingangsteils verbunden. Der Reibring 130 ist mitnehmbar mit dem Flanschteil 120 des Ausgangsteils verbunden.

Das Flanschteil 120 des Ausgangsteils weist zur mitnehmbaren Verbindung an seinem Innenradius eine Profilierung 138 auf. Der Reibring 130 weist nach radial außen gerichtete Fortsätze 140 auf. Die Fortsätze 140 greifen zur formschlüssigen Mitnahme des Reibrings 130 in die Profilierung 130 des Flanschteils 120 ein. Zwischen der Profilierung 130 des Flanschteils 120 und den Fortsätzen 140 des Reibrings 130 sind rampenförmige Anlageflächen vorhanden. Ein Eingriff der Fortsätze 140 des Reibrings 130 in die Profilierung 130 des Flanschteils 120 ist in Umfangsrichtung spielbehaftet. Die Verbindung zwischen dem Flanschteil 120 und dem Reibring 130 ist in Erstreckungsrichtung der Drehachse 104 steckbar.

Die Stützscheibe 136 weist einen stufenartigen Querschnitt mit einem Innenabschnitt 142, einem Mittelabschnitt 144 und einem Außenabschnitt 146 auf. Der Innenabschnitt 142 und der Außenabschnitt 146 erstrecken sich in radialer Richtung. Der Mittelabschnitt 144 erstreckt sich in Erstreckungsrichtung der Drehachse 104 zwischen dem Innenabschnitt 142 und dem Außenabschnitt 146. Der Außenabschnitt 146 ist umlaufend durchgängig ausgeführt. Der Außenabschnitt 146 weist eine ringscheibenartige Form auf. Der Innenabschnitt 142 ist mit radial nach innen gerichteten Fortsätzen 148 gebildet. Der Innenabschnitt 142 ist somit in Umfangsrichtung unterbrochen ausgeführt. Die Fortsätze 148 erstrecken sich bis in den Mittelabschnitt 144. Damit ist der Mittelabschnitt 144 in Umfangsrichtung ebenfalls zumindest abschnittsweise unterbrochen ausgeführt. Die Stützscheibe 136 weist vorliegend sechs Fortsätze 148 auf, die in Umfangsrichtung gleichmäßig verteilt angeordnet sind. Die Fortsätze 148 dienen zur Verbindung der Stützscheibe 136 mit dem Flanschteil 106 des Eingangsteils. Die Fortsätze 148 weisen jeweils ein Loch zur Aufnahme eines Niets 118 auf.

Die Reibscheibe 132 weist zur drehfesten Verbindung mit der Stützscheibe 136 nach radial innen gerichtete Fortsätze 150 auf. Die Fortsätze 150 der Reibscheibe 132 umgreifen die Fortsätze 148 der Stützscheibe 136 jeweils in Umfangsrichtung seitlich.

### Bezugszeichenliste

- 100: Zweimassenschwungrad
- 102: Reibeinrichtung
- 104: Drehachse
- 106: erstes Flanschteil
- 108: Deckelteil
- 110: Lagerteil
- 112: Flanschabschnitt
- 114: Lagerabschnitt
- 116: Kugellager
- 118: Niet
- 120: zweites Flanschteil
- 122: Schwungmasse
- 124: Energiespeicher
- 126: Aufnahmeraum
- 128: Fortsatz
- 130: Reibring
- 132: Reibscheibe
- 134: Tellerfeder
- 136: Stützscheibe
- 138: Profilierung
- 140: Fortsatz
- 142: Innenabschnitt
- 144: Mittelabschnitt
- 146: Außenabschnitt
- 148: Fortsatz
- 150: Fortsatz

## Patentansprüche

1. Drehschwingungsdämpfer, insbesondere Zweimassenschwungrad (100), aufweisend ein Eingangsteil mit einem ersten Flanschteil (106) und ein Ausgangsteil mit einem zweiten Flanschteil (120) mit einer gemeinsamen Drehachse (104), um die das Eingangsteil und das Ausgangsteil zusammen drehbar und relativ zueinander begrenzt verdrehbar sind und eine zwischen dem Eingangsteil und dem Ausgangsteil wirksame Feder-Dämpfer-Einrichtung mit wenigstens einem Energiespeicher (124) und einer Reibeinrichtung (102) mit einem Reibring (130) und einer mit dem ersten Flanschteil (106) verbundenen Stützscheibe (136), wobei die Stützscheibe (136) zur Verbindung mit dem ersten Flanschteil (106) nach radial innen gerichtete Fortsätze (148) aufweist, wobei das Eingangsteil zur gegenseitigen verdrehbaren Lagerung des Eingangsteils und des Ausgangsteils ein Lagerteil (110) aufweist, das zunächst baulich gesondert hergestellt und nachfolgend mit dem ersten Flanschteil (106) verbunden ist, wobei das Lagerteil (110) eine Reibfläche für den Reibring (130) bildet.

2. Drehschwingungsdämpfer nach Anspruch 1, **dadurch gekennzeichnet, dass** die Stützscheibe (136) zusammen mit dem Lagerteil (110) mit dem ersten Flanschteil (106) verbunden ist.

3. Drehschwingungsdämpfer nach wenigstens einem der vorhergehenden Ansprüche, **dadurch gekennzeichnet, dass** das zweite Flanschteil (120) einen Nabenabschnitt mit einer Profilierung (138) und der Reibring (130) nach radial außen gerichtete Fortsätze (140) aufweist, die zur formschlüssigen Mitnahme des Reibrings (130) in Umfangsrichtung in die Profilierung (138) des Nabenabschnitts eingreifen, wobei die Fortsätze (140) jeweils rampenförmige Anlageflächen für die Profilierung (138) des Nabenabschnitts aufweisen.

4. Drehschwingungsdämpfer nach wenigstens einem der vorhergehenden Ansprüche, **dadurch gekennzeichnet, dass** die Reibeinrichtung (102) eine Reibscheibe (132) aufweist, die eine Reibfläche für den Reibring (130) bildet und zur formschlüssigen Mitnahme in Umfangsrichtung die Stützscheibe (136) abschnittsweise umgreift.

5. Drehschwingungsdämpfer nach Anspruch 4, **dadurch gekennzeichnet, dass** die Reibscheibe (132) nach radial innen gerichtete Fortsätze (150) aufweist, die die Fortsätze (148) der Stützscheibe (136) abschnittsweise umgreifen.

## Claims

1. A torsional vibration damper, in particular a dual-mass flywheel (100), comprising an input part having a first flange part (106) and an output part having a second flange part (120) with a common axis of rotation (104) about which the input part and the output part are rotatable together and rotatable relative to each other in a limited manner and a spring-damper device which is effective between the input part and the output part and has at least one energy store (124) and a friction device (102) having a friction ring (130) and a support disk (136) connected to the first flange (106), wherein the support disk (136) has radially inwardly directed projections (148) for connection to the first flange part (106), wherein for mutually rotatable mounting of the input part and of the output part the input part has a bearing part (110) which is initially produced structurally separately and is subsequently connected to the first flange part (106), wherein the bearing part (110) forms a friction surface for the friction ring (130).

2. The torsional vibration damper according to claim 1, **characterised in that** the support disk (136) together with the bearing part (110) is connected to the first flange part (106).

3. The torsional vibration damper according to at least one of the preceding claims, **characterised in that** the second flange part (120) comprises a hub section having a profile (138) and the friction ring (130) has radially outwardly directed projections (140), which for interlockingly driving the friction ring (130) in the circumferential direction engage in the profile (138) of the hub section, wherein the projections (140) each have ramp-like contact surfaces for the profile (138) of the hub section.

4. The torsional vibration damper according to at least one of the preceding claims, **characterised in that** the friction device (102) has a friction disk (132), which forms a friction surface for the friction ring (130) and engages around some sections of the support disk (136) for interlocking driving in the circumferential direction.

5. The torsional vibration damper according to claim 4, **characterised in that** the friction disk (132) has radially inwardly directed projections (150), which engage around some sections of the projections (148) of the support disk (136).

## Revendications

1. Amortisseur de vibrations de torsion, en particulier volant bimasse (100), comprenant une partie d'entrée comportant une première partie de bride (106) et une partie de sortie comportant une seconde partie de bride (120) ayant un axe de rotation commun (104) autour duquel la partie d'entrée et la partie de sortie tournent ensemble et peuvent tourner de manière limitée l'une par rapport à l'autre et un dispositif amortisseur-ressort agissant entre la partie d'entrée et la partie de sortie avec au moins un accumulateur d'énergie (124) et un dispositif de friction (102) comprenant une bague de friction (130) et un disque de support (136) relié à la première partie de bride (106), le disque de support (136) présentant des saillies (148) dirigées radialement vers l'intérieur pour la connexion à la première partie de bride (106), la partie d'entrée présentant une partie de palier (110) destinée à un montage rotatif mutuel de la partie d'entrée et de la partie de sortie, la partie de palier étant initialement réalisée structurellement séparément et ultérieurement reliée à la première partie de bride (106), la partie de palier (110) formant une surface de friction pour la bague de friction (130).

2. Amortisseur de vibrations de torsion selon la revendication 1, **caractérisé en ce que** le disque de support (136) est relié, conjointement avec la partie de palier (110), à la première partie de bride (106).

3. Amortisseur de vibrations de torsion selon au moins l'une quelconque des revendications précédentes, **caractérisé en ce que** la seconde partie de bride (120) présente une partie moyeu avec un profil (138) et la bague de friction (130) présente des saillies (140) dirigées radialement vers l'extérieur qui viennent en prise, dans la direction circonférentielle, dans le profil (138) de la partie moyeu pour l'entraînement par complémentarité de forme de la bague de friction (130), les saillies (140) présentant chacune des surfaces de contact en forme de rampe pour le profil (138) de la partie moyeu.

4. Amortisseur de vibrations de torsion selon au moins l'une quelconque des revendications précédentes, **caractérisé en ce que** le dispositif de friction (102) présente un disque de friction (132) qui forme une surface de friction pour la bague de friction (130) et vient en prise autour du disque de support (136) pour l'entraînement par complémentarité de forme dans la direction circonférentielle.

5. Amortisseur de vibrations de torsion selon la revendication 4, **caractérisé en ce que** le disque de friction (132) présente des saillies (150) dirigées radialement vers l'intérieur qui viennent en prise par sections autour des saillies (148) du disque de support (136).
